# EUROPEAN PATENT APPLICATION

(11) **EP 4 752 450 A1**
(43) Date of publication of application: **03.06.2026**
(21) Application number: 24850599.2
(22) Date of filing: 30.04.2024
(51) Int. Cl.: F24F 11/65, F24F 11/871, F24F 11/64, F24F 11/61, F24F 12/00, F24F 11/58, F25B 29/00

(54) **HEAT RECOVERY AIR CONDITIONER CONTROL METHOD AND APPARATUS, HEAT RECOVERY AIR CONDITIONER, AND STORAGE MEDIUM**

(30) Priority: 07.08.2023 CN 202310986022
(71) Applicant: GD Midea Air-Conditioning Equipment Co., Ltd., Foshan, Guangdong 528311 (CN); Midea Group Co., Ltd., Foshan, Guangdong 528311 (CN)
(72) Inventor: SONG, Lei, Foshan, Guangdong 528311 (CN); LI, Shunquan, Foshan, Guangdong 528311 (CN); LI, Jianfeng, Foshan, Guangdong 528311 (CN); TAO, Kui, Foshan, Guangdong 528311 (CN); DENG, Jianyun, Foshan, Guangdong 528311 (CN)
(74) Representative: Ran, Handong
(86) International application number: PCT/CN2024/090971
(87) International publication number: WO 2025/030944

(57) **Abstract**

The present application discloses a heat recovery air conditioner control method and apparatus, a heat recovery air conditioner, and a storage medium. According to the present application, when a heat recovery air conditioner is in a started state, an outdoor environment temperature and a target gear of a compressor in an outdoor unit are acquired; on the basis of the outdoor environment temperature and the target gear, a fan of the outdoor unit is controlled to perform initialization operation; and after the initialization operation of the fan of the outdoor unit is finished, pressure information of the outdoor unit and the water tank temperature of an indoor water tank are acquired, and, on the basis of the pressure information and the water tank temperature, the fan gear of the fan of the outdoor unit is adjusted.

## Description

### CROSS-REFERENCE TO RELATED APPLICATIONS

The present application claims priority to Chinese Patent Application No. 202310986022.9, filed on August 7, 2023, the entire contents of which are incorporated herein by reference.

### TECHNICAL FIELD

The present application relates to the technical field of air conditioners, and in particular to a method and device for controlling a heat recovery air conditioner, a heat recovery air conditioner and a storage medium.

### BACKGROUND

Heat recovery air conditioners are a type of air conditioner that can simultaneously meet the needs of conventional hot water production and air conditioning (cooling or heating). Each component operates independently or simultaneously, and within the simultaneous operation scenario, there are two operating modes: partial heat recovery and full heat recovery. When cooling and hot water production demands are met simultaneously, heat recovery air conditioners can reduce the impact on heat exchange in the outdoor unit; however, the control of the fan is not precise enough, leading to unnecessary energy consumption during operation.

The above content is only used to help understand the technical solution of the present application and does not represent an admission that the above content is the prior art.

### SUMMARY

The main purpose of the present application is to provide a method and a device for controlling a heat recovery air conditioner, a heat recovery air conditioner, and a storage medium, aiming to solve the technical problem that insufficient fan control in a partial heat recovery mode of the related art, which leads to high operating costs.

To achieve the above purpose, the present application provides a method for controlling a heat recovery air conditioner, applied to a heat recovery air conditioner, the heat recovery air conditioner includes an indoor water tank, an outdoor unit, and a plurality of indoor units, the outdoor unit is connected to the indoor water tank, and each indoor unit is connected to the outdoor unit;
the method for controlling the heat recovery air conditioner includes:
in response to that the heat recovery air conditioner is in a start-up state, acquiring a outdoor ambient temperature and a target setting of a compressor in the outdoor unit;
controlling a fan of the outdoor unit to perform an initialization operation according to the outdoor ambient temperature and the target setting; and
after the fan of the outdoor unit completes the initialization operation, acquiring pressure information of the outdoor unit and a temperature of the indoor water tank, and adjusting a setting of the fan of the outdoor unit according to the pressure information and the temperature.

In an embodiment, the controlling the fan of the outdoor unit to perform the initialization operation according to the outdoor ambient temperature and the target setting includes:
determining a target temperature range within which the outdoor ambient temperature falls;
determining a frequency ratio according to the target setting and a preset maximum frequency;
querying an initial fan-setting lookup table according to the target temperature range and the frequency ratio to obtain an initialization frequency; and
controlling the fan of the outdoor unit to perform the initialization operation according to the initialization frequency.

In an embodiment, after the controlling the fan of the outdoor unit to perform the initialization operation according to the outdoor ambient temperature and the target setting, the method further includes:
ending the initialization operation in response to that a time for the initialization operation of the fan of the outdoor unit reaches a preset time threshold; or
ending the initialization operation in response to that a high-pressure temperature and the time of the outdoor unit meet an initialization exit condition.

In an embodiment, the adjusting the setting of the fan of the outdoor unit according to the pressure information and the temperature includes:
determining a high-pressure saturation temperature according to the pressure information;
determining a first temperature threshold and a second temperature threshold according to the temperature of the indoor water tank; and
adjusting the setting of the fan of the outdoor unit according to the high-pressure saturation temperature, the first temperature threshold and the second temperature threshold.

In an embodiment, the adjusting the setting of the fan of the outdoor unit according to the high-pressure saturation temperature, the first temperature threshold and the second temperature threshold includes:
determining a temperature comparison range according to the first temperature threshold and the second temperature threshold;
comparing the high-pressure saturation temperature with the temperature comparison range, and determining a variable setting according to a comparison result; and
adjusting the setting of the fan of the outdoor unit according to the variable setting.

In an embodiment, after the adjusting the setting of the fan of the outdoor unit according to the pressure information and the temperature, the method further includes:
in response to a change in loads of the plurality of indoor units, acquiring capacity of the outdoor unit and a number of indoor units with energy demand;
determining a total energy demand capacity of the plurality of indoor units according to the number of indoor units with energy demand; and
adjusting the setting of the fan of the outdoor unit according to the total energy demand capacity of the plurality of indoor units and the capacity of the outdoor unit.

In an embodiment, the adjusting the setting of the fan of the outdoor unit according to the total energy demand capacity of the plurality of indoor units and the capacity of the outdoor unit includes:
determining an indoor-outdoor capacity ratio according to the total energy demand capacity of the plurality of indoor units and the capacity of the outdoor unit;
determining a ratio fluctuation parameter according to the indoor-outdoor capacity ratio; and
adjusting the setting of the fan of the outdoor unit according to the ratio fluctuation parameter and a preset fluctuation threshold.

In addition, to achieve the above purpose, the present application further proposes a device for controlling a heat recovery air conditioner, including:
a data acquisition module, configured to acquire an outdoor ambient temperature and a target setting of a compressor in an outdoor unit when the heat recovery air conditioner is in a start-up state;
an initialization module, configured to control a fan of an outdoor unit to perform an initialization operation according to the outdoor ambient temperature and the target setting; and
a setting adjustment module, configured to acquire pressure information and a temperature of a water tank of the outdoor unit after the fan of the outdoor unit completes the initialization operation, and adjust a setting of the fan of the outdoor unit according to the pressure information and the temperature of the water tank.

In addition, to achieve the above purpose, the present application further proposes a heat recovery air conditioner, including:
a memory;
a processor; and
a program for controlling the heat recovery air conditioner stored in the memory and executable on the processor, the program for controlling the heat recovery air conditioner is configured to implement the method for controlling the heat recovery air conditioner as described above.

In addition, to achieve the above purpose, the present application further proposes a storage medium, and a program for controlling a heat recovery air conditioner is stored in the storage medium. When the program for controlling the heat recovery air conditioner is executed by a processor, the method for controlling the heat recovery air conditioner as described above is implemented.

In the present application, when the heat recovery air conditioner is in the start-up state, the outdoor ambient temperature and the target setting of the compressor in the outdoor unit are acquired; the fan of the outdoor unit is controlled to perform an initialization operation according to the outdoor ambient temperature and the target setting; after the fan of the outdoor unit fan completes the initialization operation, the pressure information of the outdoor unit and the temperature of the indoor water tank are acquired, and the setting of the fan of the outdoor unit is acquired according to the pressure information and the temperature of the indoor water tank. In this way, the initialization operation is first performed for the fan according to the outdoor ambient temperature and the target setting of the compressor. Then, during the operation of the heat recovery air conditioner, the setting of the fan in the outdoor unit is adjusted in real time according to the pressure information of the outdoor unit and the temperature of the indoor water tank. In the partial heat recovery mode, there are two condensation units, so the demand for heat exchange from the outdoor unit is relatively small. In this case, the setting of the fan is adjusted in a timely manner according to the water tank and outdoor information to optimize control for the fan which can reduce operating costs.

### BRIEF DESCRIPTION OF THE DRAWINGS

FIG. 1 is a schematic structural diagram of a heat recovery air conditioner in a hardware operating environment according to an embodiment of the present application.
FIG. 2 is a flowchart of a method for controlling the heat recovery air conditioner according to a first embodiment of the present application.
FIG. 3 is a schematic structural diagram of a system in the method for controlling the heat recovery air conditioner according to an embodiment of the present application.
FIG. 4 is a flowchart of the method for controlling the heat recovery air conditioner according to a second embodiment of the present application.
FIG. 5 is a flowchart of the method for controlling the heat recovery air conditioner according to a third embodiment of the present application.
FIG. 6 is a structural block diagram illustrating a device for controlling the heat recovery air conditioner according to a first embodiment of the present application.

### Description of reference signs:

| reference sign | name | reference sign | name |
|---|---|---|---|
| 1 | outdoor unit of air conditioner | LA | hydraulic valve |
| 2 | indoor unit of air conditioner | GA | air pressure valve |
| 3 | hydraulic module | 121 | first reversing device |
| 11 | compressor | 122 | second reversing device |
| 12 | reversing device | 123 | third reversing device |
| 13 | outdoor heat exchanger | 31 | hot water tank |
| EXV | electronic expansion valve | | |

The realization of the purpose, functional features, and advantages of the present application will be further explained in conjunction with the embodiments and with reference to the accompanying drawings.

### DETAILED DESCRIPTION OF THE EMBODIMENTS

It should be understood that the specific embodiments described herein are for illustrative purposes only and are not intended to limit the scope of the present application.

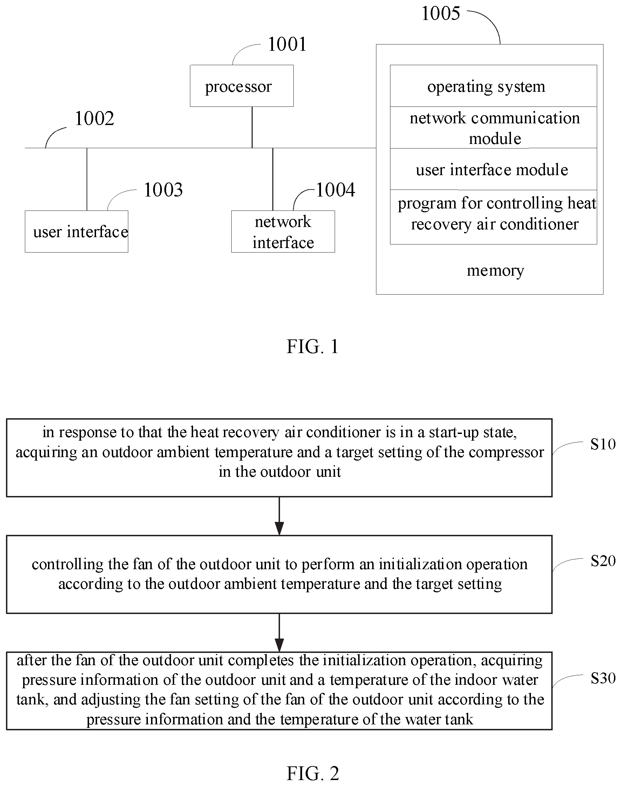

Referring to FIG. 1, FIG. 1 is a schematic structural diagram of a heat recovery air conditioner in the hardware operating environment involved in the embodiments of the present application.

As shown in FIG. 1, the heat recovery air conditioner may include: a processor 1001 such as a central processing unit (CPU), a communication bus 1002, a user interface 1003, a network interface 1004, and a memory 1005. The communication bus 1002 is used to enable communication between these components. The user interface 1003 may include a display and an input unit such as a keyboard. The user interface 1003 may also include standard wired and wireless interfaces. The network interface 1004 may include standard wired and wireless interfaces (such as Wireless-Fidelity (Wi-Fi) interfaces). The memory 1005 can be a high-speed random access memory (RAM) or a stable non-volatile memory (NVM), such as a disk storage device. The memory 1005 can also be a storage device independent of the aforementioned processor 1001.

Those skilled in the art will understand that the structure shown in FIG. 1 does not constitute a limitation on the heat recovery air conditioner, and may include more or fewer components than shown, or combine certain components, or have different component arrangements.

As shown in FIG. 1, the memory 1005, as a storage medium, may include an operating system, a network communication module, a user interface module, and a program for controlling the heat recovery air conditioner.

In the heat recovery air conditioner shown in FIG. 1, the network interface 1004 is mainly used for data communication with the network server; the user interface 1003 is mainly used for data interaction with the user; the processor 1001 and the memory 1005 in the heat recovery air conditioner of the present application can be provided in the heat recovery air conditioner. The heat recovery air conditioner calls the program for controlling the heat recovery air conditioner stored in the memory 1005 through the processor 1001 and performs the method for controlling the heat recovery air conditioner provided in the present application.

The present application provides a method for controlling the heat recovery air conditioner. Referring to FIG. 2, FIG. 2 is a flowchart of the method for controlling the heat recovery air conditioner according to a first embodiment of the present application.

In an embodiment, the method for controlling the heat recovery air conditioner includes the following steps.

Step S10, in response to that the heat recovery air conditioner is in a start-up state, acquiring an outdoor ambient temperature and a target setting of the compressor in the outdoor unit.

In an embodiment, the execution subject of the present application can be the heat recovery air conditioner, which has functions such as data processing, data communication, and program execution. Other devices with similar functions can also be used, which is not limited in this embodiment. For ease of explanation, this embodiment uses the heat recovery air conditioner as an example.

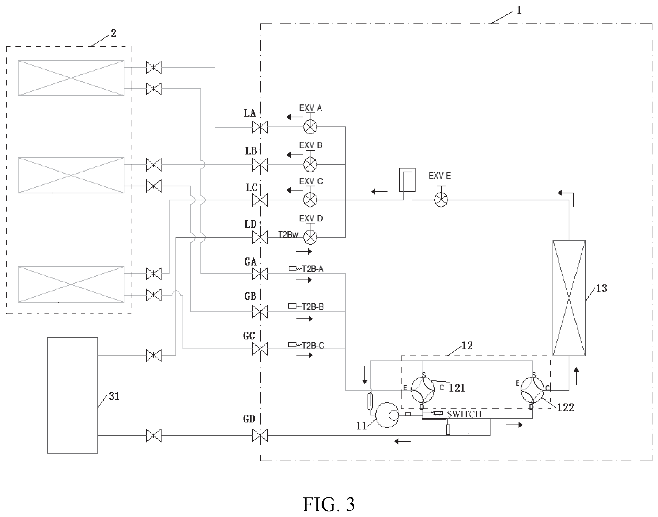

It should be noted that, as shown in FIG. 3, FIG. 3 is a schematic structural diagram of the heat recovery air conditioner of the present application, in an embodiment, when the heat recovery air conditioner is detected to be starting up and in a partial heat recovery mode, i.e., the outdoor unit and the water tank act as condensation devices, and the indoor unit acts as evaporation devices. Some heat will dissipate into the environment.

The heat recovery air conditioner is an air conditioner that can simultaneously meet the needs of conventional hot water production and air conditioning (cooling or heating). It operates in scenarios where each component runs independently or simultaneously, with two operating modes: partial heat recovery and full heat recovery. When cooling and hot water production are simultaneously required, the heat recovery air conditioner reduces the impact on heat exchange in the outdoor unit. In the partial heat recovery mode, with two condensing units, the demand for heat exchange from the outdoor unit is lower. In this case, optimizing the fan control can reduce operating costs.

In an embodiment, the outdoor ambient temperature refers to the ambient temperature detected by the outdoor unit. Then, the target setting of the compressor of the outdoor unit is obtained. The target setting refers to an initial operating setting determined by the heat recovery air conditioner upon startup according to the energy requirements of the indoor unit and the water tank.

Step S20, controlling the fan of the outdoor unit to perform an initialization operation according to the outdoor ambient temperature and the target setting.

It should be noted that the initialization operation refers to the process of first controlling the fan to start up initially according to the startup procedure of the heat recovery air conditioner, according to the outdoor ambient temperature and the target setting, before making real-time adjustments to the setting and frequency of the fan.

To ensure accurate initialization operation, a temperature range of the outdoor ambient temperature is first determined according to the outdoor ambient temperature, that is, the corresponding temperature range is determined according to a range of values of the outdoor ambient temperature.

After determining the target temperature range, the fan frequency corresponding to the target setting is determined first according to the target setting, then the fan frequency is divided by the preset maximum frequency to obtain the frequency ratio, and finally an initial fan-setting lookup table is queries according to the target temperature range and the frequency ratio to determine the initialization frequency. Finally, the fan of the outdoor unit is controlled to perform the initialization operation according to the initialization frequency.

In an embodiment, the fan setting is defined as X. The conversion relationship between the fan speed (unit: r/min) and the fan frequency is: Fan speed = a * X, where a is preferably 50, with a protection range of 5rpm to 100rpm. Whenever the fan starts from 0rpm, if the speed converted from the target setting X is lower than b, it is necessary to operate the fan at speed b for 10s before switching to the target frequency. b is preferably 400, with a protection range of 150rpm to 600rpm.

It should be noted that the fan starts at the initial fan setting according to the ambient temperature and maintains this state for 2min. The initial fan-setting lookup table is shown in Table 1.

**Table 1**

| outdoor ambient temperature/°C | target frequency of compressor/T4CoolMaxFre4 | | | | |
|---|---|---|---|---|---|
| | (0,a1) | [a1, a2) | [a2, a3) | [a3, a4) | [a4, +∞) |
| T4≤Toa1 | X=x1 | X=x 1 | X=x1 | X=x1 | X=x 1 |
| Toa1 < T4≤Toa2 | X=x1 | X=x1 | X=x2 | X=x3 | X=x4 |
| Toa2 < T4≤Toa3 | X=x1 | X=x4 | X=x5 | X=x6 | X=x6 |
| Toa3<T4≤Toa4 | X=x2 | X=x4 | X=x5 | X=x6 | X=x6 |
| Toa4<T4≤Toa5 | X=x4 | X=x5 | X=x6 | X=x6 | X=x7 |
| Toa5<T4≤Toa6 | X=x4 | X=x6 | X=x7 | X=x7 | Maximum fan setting |
| T4>Toa6 | Maximum fan setting | Maximum fan setting | Maximum fan setting | Maximum fan setting | Maximum fan setting |

Where x1 < x2 < x3 < x4 < x5 < x6 < x7, these values correspond to the maximum and minimum settings of different outdoor units. Optimal values cannot be provided. Toa1 < Toa2 < Toa3 < Toa4 < Toa5 < Toa6. The preferred value for Toa1 is 5°C, with a protection range of 0°C to 10°C. The preferred value for Toa2 is 15°C, with a protection range of 5°C to 20°C. The preferred value for Toa3 is 20°C, with a protection range of 10°C to 30°C. The preferred value for Toa4 is 30°C, with a protection range of 20°C to 38°C. The preferred value for Toa5 is 40°C, with a protection range of 30°C to 45°C. The preferred value for Toa6 is 45°C, with a protection range of 40°C to 50°C. T4CoolMaxFre4 represents a ratio of the current target frequency to the maximum frequency operated at the current temperature T4. a1 < a2 < a3 < a4; a1 is preferably 20%, with a protection range of 10% to 30%; a2 is preferably 40%, with a protection range of 30% to 55%; a3 is preferably 60%, with a protection range of 45% to 70%; a4 is preferably 80%, with a protection range of 60% to 90%.

This method enables the initialization control of the fan according to the initial fan-setting lookup table, and allows selection of the optimal fan frequency for the ambient temperature.

To facilitate timely exit after initialization and proceed to the next step, a determination step is added after step S10. That is, the initialization process automatically ends and exits when the fan of the outdoor unit reaches a preset time threshold during initialization, or when the high-pressure temperature and initialization time meet the initialization exit conditions.

The conditions for exiting initialization are as follows: the initialization time during the oil return phase in a heating mode reaches 20 seconds, where 20 seconds is the preset time threshold, but it can also be any other arbitrarily set time threshold, which is not limited in the present application. Another condition is that the initialization exit condition is met: if the initialization time in a cooling mode reaches 2 minutes or [Tc is greater than or equal to 56°C and initialization time is greater than or equal to 20 seconds], the initialization control exits. The initialization exits if either or both conditions are met.

In this way, the heat recovery air conditioner can exit the initialization control in a timely manner and enter the step of real-time fan frequency adjustment by determining multiple conditions and exiting the initialization control.

Step S30, after the fan of the outdoor unit completes the initialization operation, acquiring pressure information of the outdoor unit and a temperature of the indoor water tank, and adjusting the fan setting of the fan of the outdoor unit according to the pressure information and the temperature of the water tank.

In an embodiment, after the initialization operation of the fan is completed, the pressure information of the outdoor unit and the water tank temperature of the indoor water tank are obtained. This allows the operating status of the heat recovery air conditioner to be monitored in real time according to the pressure information and the water tank temperature, and the fan frequency to be adjusted accordingly, thereby ensuring the effective operation of the heat recovery air conditioner while saving costs.

The present application first initializes the fan operation according to the outdoor ambient temperature and the target setting of the compressor. Then, during the operation of the heat recovery air conditioner, the fan setting of the fan of the outdoor unit is adjusted in real time according to the pressure information of the outdoor unit and the temperature of the indoor water tank. In the partial heat recovery mode, there are two condensation units, so the demand for heat exchange from the outdoor unit is relatively small. In this case, the fan setting is adjusted in a timely manner according to the water tank and outdoor information to optimize fan control and reduce operating costs.

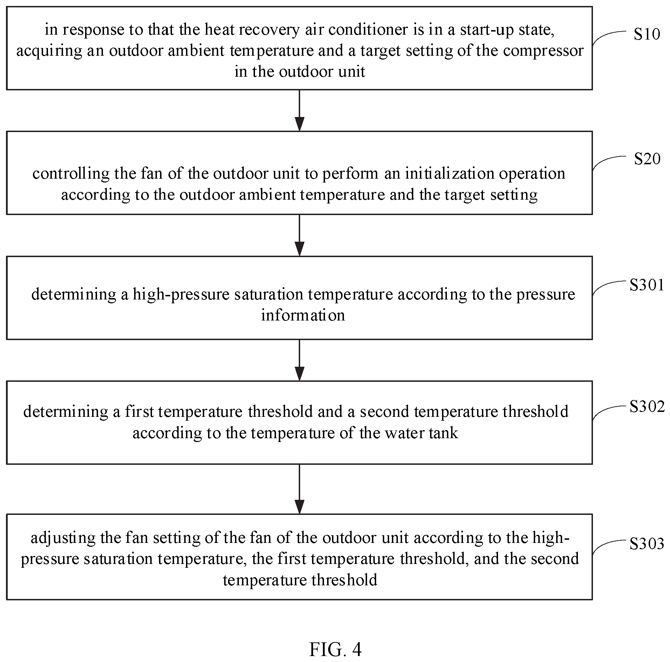

Referring to FIG. 4, FIG. 4 is a flowchart illustrating the method for controlling the heat recovery air conditioner according to a second embodiment of the present application.

According to the first embodiment, in an embodiment, step S30 in the method for controlling the heat recovery air conditioner includes the following steps.

Step S301, determining a high-pressure saturation temperature according to the pressure information.

It should be noted that the high-pressure saturation temperature refers to the saturation temperature at which a pressure signal received by a pressure sensor is converted into pressure according to the pressure information, and is called the high-pressure temperature Tc.

Step S302, determining a first temperature threshold and a second temperature threshold according to the temperature of the water tank.

The first temperature threshold and the second temperature threshold refer to temperature thresholds calculated according to the water tank temperature. The first temperature threshold is K1 = Tw + c, and K1ₘᵢₙ ≤ K1 ≤ K1ₘₐₓ. K2 = Tw + d, and K2ₘᵢₙ ≤ K2 ≤ K2ₘₐₓ. K1ₘᵢₙ is preferably 35°C, with a protection range of 30°C to 45°C; K1ₘₐₓ is preferably 50°C, with a protection range of 45°C to 60°C; K2ₘᵢₙ is preferably 38°C, with a protection range of 30°C to 45°C; K2ₘₐₓ is preferably 53°C, with a protection range of 45°C to 60°C.

Step S303, adjusting the fan setting of the fan of the outdoor unit according to the high-pressure saturation temperature, the first temperature threshold, and the second temperature threshold.

In an embodiment, after determining the high-pressure saturation temperature, the fan setting of the fan of the outdoor unit is determined by combining the first temperature threshold and the second temperature threshold.

In order to accurately adjust the fan setting, a temperature comparison range is first constructed according to the first temperature threshold and the second temperature threshold. Specifically, the temperature comparison range consists of three ranges formed by K1 and K2, namely less than K1, greater than K2, and greater than or equal to K1 and less than or equal to K2.

It should be noted that the high-pressure saturation temperature is compared with three value ranges of the thermometer to determine the variable setting. Specifically, 1) when the actual high-pressure temperature Tc < K1°C, Δ X = Tc - K1; 2) when the actual high-pressure temperature Tc > K2°C, Δ X = (Tc - K2) * 2; 3) when K1°C ≤ actual high-pressure Tc ≤ K2°C, Δ X = 0. Tw is the water temperature in the tank, which can be detected by a temperature sensor. The preferred value for c is 18, with a protection range of 5 to 25. The preferred value for d is 18, with a protection range of 5 to 25.

Whenever Tc ≥ Tc1 is detected, the outdoor fan immediately and without periodic restriction is adjusted to the highest operating level; then, when Tc ≤ Tc1, normal control is restored. Whenever Tc ≤ Tc3 is detected, the outdoor fan immediately and without periodic restriction is adjusted to 0; after the fan stops and restarts, Tc ≥ Tc4 must be met.

In this way, accurate adjustment of the outdoor fan according to the water tank temperature is achieved, reducing consumption and cost.

The fan control in this embodiment is related to the high pressure and water tank temperature, enabling intelligent automatic adjustment, automatically reducing costs and adjusting power consumption according to actual needs.

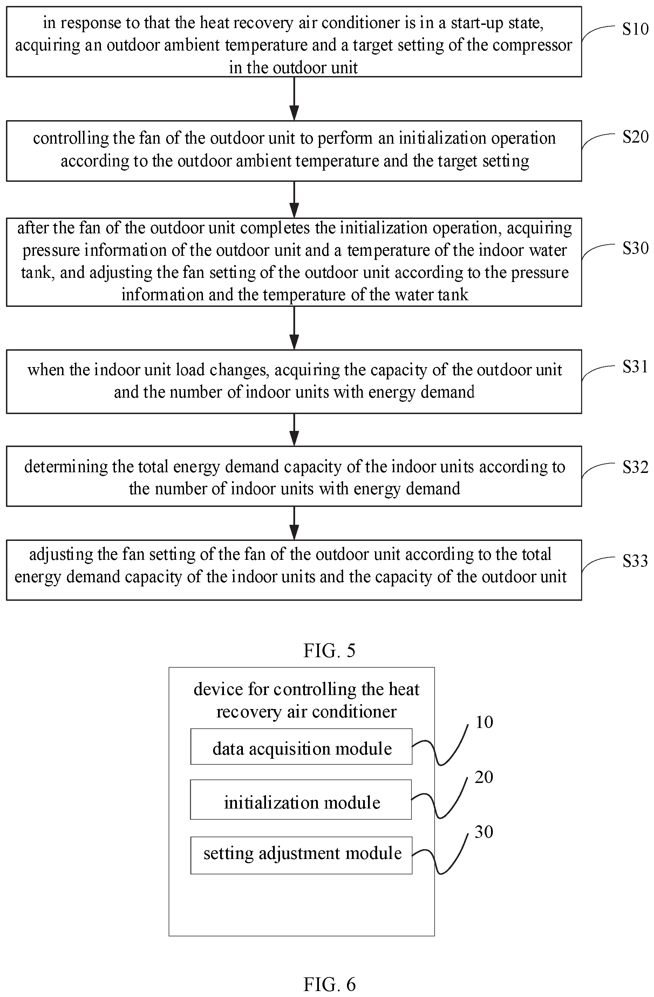

Referring to FIG. 5, FIG. 5 is a flowchart illustrating the method for controlling the heat recovery air conditioner according to a third embodiment of the present application.

according to the first embodiment, in an embodiment, after the step S30, the method for controlling the heat recovery air conditioner further includes the following steps.

Step S31, when the indoor unit load changes, acquiring the capacity of the outdoor unit and the number of indoor units with energy demand.

It should be noted that in most scenarios, conventional control can quickly achieve equilibrium through adjustment. However, when the indoor unit load fluctuates significantly, the fan adjustment lags behind pressure changes. Adding feedforward mechanisms, such as recalculating the fan setting at the initial stage of load changes, can prevent sudden changes in system pressure during fan control.

A change in the indoor unit load indicates a change in the number of indoor units requiring energy; the number of indoor units starting up and requiring energy may increase or decrease.

In an embodiment, the outdoor unit capacity refers to the total power consumption and energy demand of the outdoor unit.

Step S32, determining the total energy demand capacity of the indoor units according to the number of indoor units with energy demand.

It should be noted that after determining the number of indoor units with energy demand, the total capacity of the sum of the energy demands of each indoor unit is then determined according to that number.

Step S33, adjusting the fan setting of the fan of the outdoor unit according to the total energy demand capacity of the indoor units and the capacity of the outdoor unit.

Once the total energy demand capacity of the indoor units is determined, the fan of the outdoor unit is adjusted according to the capacity of the outdoor unit.

To accurately adjust the fan setting to adapt to changes in energy demand and load, the ratio of indoor to outdoor capacity is first determined according to the total energy demand capacity of the indoor units and the capacity of the outdoor unit. This is defined as Ccb = total indoor unit capacity with energy demand / capacity of the outdoor unit.

In an embodiment, when Ccb fluctuates from low to high by ≥e: the initial fan setting is recalculated according to the new state. Ccb fluctuation from low to high = (Ccb of the previous cycle - current Ccb) / Ccb of the previous cycle, where e is the ratio fluctuation parameter. i. If the initial fan setting calculated under the current conditions is greater than or equal to the current operating setting of the fan, then the fan operates at its initial frequency, and after 40 seconds, the fan frequency is adjusted according to the above pressure. If the initial fan setting calculated under the current conditions is < the current operating frequency of the fan, then the fan frequency is adjusted according to the above pressure. When Ccb fluctuates from low to high by <e or Ccb fluctuates from high to low, then the fan setting is adjusted according to the above pressure. d is preferably 20%, with a protection range of 15% to 50%.

The present application stabilizes the fan setting through conventional adjustments when the indoor unit load changes little. When the indoor unit load changes significantly, it avoids sudden changes in system pressure during fan control by increasing or decreasing feedforward adjustment to recalculate the fan setting at the beginning of the load change.

Furthermore, the present application also proposes a storage medium on which a program for controlling the heat recovery air conditioner is stored. When the program for controlling the heat recovery air conditioner is executed by a processor, the method for controlling the heat recovery air conditioner described above is implemented.

Since this storage medium adopts all the technical solutions of all the above embodiments, it has at least all the beneficial effects brought about by the technical solutions of the above embodiments, which is not repeated here.

Referring to FIG. 6, which is a structural block diagram of a device for controlling the heat recovery air conditioner according to the first embodiment of the present application.

As shown in FIG. 6, the device for controlling the heat recovery air conditioner in the present application includes a data acquisition module 10, an initialization module 20 and a setting adjustment module 30. The data acquisition module 10 is configured to acquire the outdoor ambient temperature and the target setting of the compressor in the outdoor unit when the heat recovery air conditioner is in the start-up state.

In an embodiment, the execution subject of the present application may be the heat recovery air conditioner, which has functions such as data processing, data communication, and program execution. Other devices with similar functions may also be used, which is not limited in this embodiment. For ease of explanation, this embodiment uses the heat recovery air conditioner as an example.

It should be noted that, as shown in FIG. 3, FIG. 3 is a schematic structural diagram of the heat recovery air conditioner according to the present application, in an embodiment, when the heat recovery air conditioner is detected to be starting up and in the partial heat recovery mode, i.e., the outdoor unit and water tank act as condensation devices, and the indoor unit acts as evaporation devices. Some heat will dissipate into the environment.

The heat recovery air conditioner is an air conditioner that can simultaneously meet the needs of conventional hot water production and air conditioning (cooling or heating). There are scenarios where each component operates independently and simultaneously. Within the simultaneous operation scenario, there are two operating modes: partial heat recovery and full heat recovery. When cooling and hot water production are both required, the heat recovery air conditioner can reduce the impact on the heat exchange of the outdoor unit. In the partial heat recovery mode, there are two condensation units, resulting in a smaller demand for heat exchange from the outdoor unit. In this case, optimized fan control can reduce operating costs.

In an embodiment, the outdoor ambient temperature refers to the ambient temperature detected by the outdoor unit. Then, the target setting of the compressor of the outdoor unit is obtained. The target setting refers to the initial operating setting determined by the heat recovery air conditioner upon startup according to the energy demands of the indoor unit and the water tank.

The initialization module 20 is configured to control the fan of the outdoor unit to perform initialization operation according to the outdoor ambient temperature and the target setting.

It should be noted that initialization operation refers to the process of first controlling the fan to start up initially, following the startup procedure of the heat recovery air conditioner, according to the outdoor ambient temperature and the target setting, before making real-time adjustments to the setting and frequency of the fan.

To ensure accurate initialization operation, the outdoor ambient temperature range is first determined according to the outdoor ambient temperature, that is, the corresponding temperature range is determined according to the range of outdoor ambient temperature values.

After determining the target temperature range, the fan frequency corresponding to the target setting is determined first, then the fan frequency corresponding to the target setting is divided by the preset maximum frequency to obtain the frequency ratio, and finally the initial fan setting reference table is looked up according to the target temperature range and the frequency ratio to determine the initialization frequency. Finally, the fan of the outdoor unit is controlled to initialize according to the initialization frequency.

In an embodiment, the fan setting is defined as X, where the conversion relationship between fan speed (unit: r/min) and fan frequency is: fan speed = a * X, where a is preferably 50, with a protection range of 5rpm to 100rpm. Whenever the fan starts rotating from 0, if the speed converted from the target setting X is less than b, it is necessary to run at speed b for 10 seconds before switching to the target frequency. b is preferably 400, with a protection range of 150rpm to 600rpm.

It should be noted that when the fan starts, it enters the initialization of the fan setting according to the ambient temperature and maintains it for 2 minutes. The initial fan-setting lookup table is shown in Table 1.

Where x1 < x2 < x3 < x4 < x5 < x6 < x7, these correspond to the maximum and minimum settings of different outdoor units. Optimal values cannot be provided. Toa1 < Toa2 < Toa3 < Toa4 < Toa5 < Toa6. The preferred value for Toa1 is 5°C, with a protection range of 0°C to 10°C; the preferred value for Toa2 is 15°C, with a protection range of 5°C to 20°C; the preferred value for Toa3 is 20°C, with a protection range of 10°C to 30°C; the preferred value for Toa4 is 30°C, with a protection range of 20°C to 38°C; the preferred value for Toa5 is 40°C, with a protection range of 30°C to 45°C; and the preferred value for Toa6 is 45°C, with a protection range of 40°C to 50°C. T4CoolMaxFre4 represents the ratio of the current target frequency to the maximum operating frequency at the current temperature T4. a1 < a2 < a3 < a4 < ; a1 is preferably 20%, with a protection range of 10% to 30%; a2 is preferably 40%, with a protection range of 30% to 55%; a3 is preferably 60%, with a protection range of 45% to 70%; a4 is preferably 80%, with a protection range of 60% to 90%.

This method enables the initialization control of the fan according to an initial fan-setting lookup table, and allows selection of the optimal fan frequency for the ambient temperature.

To exit the initialization process in a timely manner after the initialization and proceed to the next process, a determination step is performed after step S10. That is, when the fan of the outdoor unit reaches the preset time threshold during initialization, or when the high-pressure temperature and the initialization time meet the initialization exit conditions, the initialization will automatically end and exit.

The conditions for exiting initialization are as follows: the initialization time during the oil return phase in the heating mode reaches 20 seconds, where 20 seconds is the preset time threshold, but it can also be any other arbitrarily set time threshold, which is not limited in the present application. Another condition is that the initialization exit condition is met: the initialization time in the cooling mode reaches 2 minutes or [Tc ≥ 56°C and initialization time ≥ 20 seconds], at which point initialization control exits. Initialization exits if either or both conditions are met.

In this way, the heat recovery air conditioner can exit the initialization control in a timely manner and enter the step of real-time fan frequency adjustment by determining multiple conditions and exiting the initialization control.

The setting adjustment module 30 is configured to acquire the pressure information of the outdoor unit and water tank temperature after the fan of the outdoor unit completes the initialization operation, and adjust the fan setting of the fan of the outdoor unit according to the pressure information and the water tank temperature.

In an embodiment, after the fan completes the initialization operation, the pressure information of the outdoor unit and the water tank temperature of the indoor water tank are obtained. This allows the operating status of the heat recovery air conditioner to be monitored in real time according to the pressure information and the water tank temperature, and the fan frequency to be adjusted accordingly, thereby ensuring the effective operation of the heat recovery air conditioner while saving costs.

The present application first initializes the fan operation according to the outdoor ambient temperature and the target setting of the compressor. Then, during the operation of the heat recovery air conditioner, the fan setting of the fan of the outdoor unit is adjusted in real time according to the pressure information of the outdoor unit and the temperature of the indoor water tank. In the partial heat recovery mode, there are two condensation units, so the demand for heat exchange from the outdoor unit is relatively small. In this case, the fan speed is adjusted in a timely manner according to the water tank and outdoor information to optimize fan control and reduce operating costs.

The above are merely illustrative examples and do not constitute any limitation on the technical solution of the present application. In specific applications, those skilled in the art can make modifications as needed, which is not limited in the present application.

It should be noted that the workflow described above is merely illustrative and does not limit the scope of the present application. In practical applications, those skilled in the art can select some or all of the workflow described above to achieve the purpose of this embodiment according to actual needs, and no restrictions are imposed here.

In addition, for technical details not described in detail in an embodiment, please refer to the method for controlling the heat recovery air conditioner provided in any embodiment of the present application, which will not be repeated here.

Furthermore, it should be noted that, in this document, the terms "comprise", "include" or any other variants thereof are intended to cover a non-exclusive inclusion. Thus, a process, method, article, or system that includes a series of elements not only includes those elements, but also includes other elements that are not explicitly listed, or also includes elements inherent to the process, method, article, or system. If there are no more restrictions, the element defined by the sentence "including a..." does not exclude the existence of other identical elements in the process, method, article or system that includes the element.

The sequence numbers of the embodiments in the present application are for descriptive purposes only and do not represent the superiority or inferiority of the embodiments.

Through the description of the above embodiments, those skilled in the art can clearly understand that the methods of the above embodiments can be implemented by means of software plus a necessary general-purpose hardware platform, and of course also by hardware, but in many cases the former is better implementation. Based on this understanding, the essence of the technical solution of the present application or the part that contributes to the prior art can be embodied in the form of software products, the computer software product is stored in one storage medium (such as ROM/RAM, magnetic disk, optical disk), including several instructions to make a terminal device (which may be a mobile phone, a computer, a server, or a network device, etc.) execute the method of each embodiment of the present application.

The above are only some embodiments of the present application, and are not therefore limiting the scope of the present application. Any equivalent structure or equivalent process transformation made by using the contents of the specification and drawings of the present application, or directly or indirectly used in other related technical fields, is also included in the scope of the present application.

## Claims

1. A method for controlling a heat recovery air conditioner, applied to the heat recovery air conditioner, wherein:
the heat recovery air conditioner comprises an indoor water tank, an outdoor unit and a plurality of indoor units, the outdoor unit being connected to the indoor water tank, and each of the plurality of indoor units being connected to the outdoor unit; and
the method for controlling the heat recovery air conditioner comprises:
in the case that the heat recovery air conditioner is in a start-up state, acquiring an outdoor ambient temperature and a target setting of a compressor in the outdoor unit;
controlling, according to the outdoor ambient temperature and the target setting, a fan of the outdoor unit to perform an initialization operation; and
after the fan of the outdoor unit completes the initialization operation, acquiring pressure information of the outdoor unit and a temperature of the indoor water tank, and adjusting a setting of the fan of the outdoor unit according to the pressure information and the temperature.

2. The method for controlling the heat recovery air conditioner according to claim 1, wherein the controlling, according to the outdoor ambient temperature and the target setting, the fan of the outdoor unit to perform the initialization operation comprises:
determining a target temperature range within which the outdoor ambient temperature falls;
determining a frequency ratio according to the target setting and a preset maximum frequency;
querying an initial fan-setting lookup table according to the target temperature range and the frequency ratio to obtain an initialization frequency; and
controlling the fan of the outdoor unit to perform the initialization operation according to the initialization frequency.

3. The method for controlling the heat recovery air conditioner according to claim 1, wherein after the controlling, according to the outdoor ambient temperature and the target setting, the fan of the outdoor unit to perform the initialization operation, the method further comprises:
ending the initialization operation in the case that a time for the initialization operation of the fan of the outdoor unit reaches a preset time threshold; or
ending the initialization operation in the case that a high-pressure temperature of the outdoor unit and a time for the initialization operation meet an initialization exit condition.

4. The method for controlling the heat recovery air conditioner according to claim 1, wherein the adjusting the setting of the fan of the outdoor unit according to the pressure information and the temperature comprises:
determining a high-pressure saturation temperature according to the pressure information;
determining a first temperature threshold and a second temperature threshold according to the temperature of the indoor water tank; and
adjusting the setting of the fan of the outdoor unit according to the high-pressure saturation temperature, the first temperature threshold and the second temperature threshold.

5. The method for controlling the heat recovery air conditioner according to claim 4, wherein the adjusting the setting of the fan of the outdoor unit according to the high-pressure saturation temperature, the first temperature threshold and the second temperature threshold comprises:
determining a temperature comparison range according to the first temperature threshold and the second temperature threshold;
comparing the high-pressure saturation temperature with the temperature comparison range, and determining a variable setting according to a comparison result; and
adjusting the setting of the fan of the outdoor unit according to the variable setting.

6. The method for controlling the heat recovery air conditioner according to any one of claims 1 to 5, wherein after the adjusting the setting of the fan of the outdoor unit according to the pressure information and the temperature, the method further comprises:
in response to a change in loads of the plurality of indoor units, acquiring capacity of the outdoor unit and the number of indoor units with energy demand;
determining a total energy demand capacity of the plurality of indoor units according to the number of the indoor units with energy demand; and
adjusting the setting of the fan of the outdoor unit according to the total energy demand capacity of the plurality of indoor units and the capacity of the outdoor unit.

7. The method for controlling the heat recovery air conditioner according to claim 6, wherein the adjusting the setting of the fan of the outdoor unit according to the total energy demand capacity of the plurality of indoor units and the capacity of the outdoor unit comprises:
determining an indoor-outdoor capacity ratio according to the total energy demand capacity of the plurality of indoor units and the capacity of the outdoor unit;
determining a ratio fluctuation parameter according to the indoor-outdoor capacity ratio; and
adjusting the setting of the fan of the outdoor unit according to the ratio fluctuation parameter and a preset fluctuation threshold.

8. A device for controlling a heat recovery air conditioner, comprising:
a data acquisition module, configured to acquire an outdoor ambient temperature and a target setting of a compressor in an outdoor unit when the heat recovery air conditioner is in a start-up state;
an initialization module, configured to control a fan of an outdoor unit to perform an initialization operation according to the outdoor ambient temperature and the target setting; and
a setting adjustment module, configured to acquire pressure information and a temperature of a water tank of the outdoor unit after the fan of the outdoor unit completes the initialization operation, and adjust a setting of the fan of the outdoor unit according to the pressure information and the temperature of the water tank.

9. A heat recovery air conditioner, comprising:
a memory;
a processor; and
a program for controlling the heat recovery air conditioner stored in the memory and executable on the processor, wherein the program for controlling the heat recovery air conditioner is configured to implement the method for controlling the heat recovery air conditioner according to any one of claims 1 to 7.

10. A storage medium, having stored thereon a program for controlling a heat recovery air conditioner, wherein when the program for controlling the heat recovery air conditioner is executed by a processor, the method for controlling the heat recovery air conditioner according to any one of claims 1 to 7 is implemented.
